# EUROPÄISCHE PATENTSCHRIFT

(11) **EP 3 033 294 B1**
(45) Veröffentlichungstag und Bekanntmachung des Hinweises auf die Patenterteilung: **05.06.2019**
(21) Anmeldenummer: 14750754.5
(22) Anmeldetag: 14.08.2014
(51) Int. Cl.: B66C 23/90, G01B 7/02, B66C 23/70, B65H 75/44, B66C 13/22

(54) **INTELLIGENTE MOTORBREMSE FÜR EINEN LÄNGENWINKELGEBER EINES KRANS**
INTELLIGENT MOTOR BRAKE FOR A LENGTH/ANGLE SENSOR OF A CRANE
FREIN MOTEUR INTELLIGENT POUR UN CAPTEUR D'ANGLE ET DE LONGUEUR D'UNE GRUE

(30) Priorität: 15.08.2013 DE 102013216246
(43) Veröffentlichungstag der Anmeldung: 22.06.2016
(73) Patentinhaber: WIKA Mobile Control GmbH & Co. KG, 76275 Ettlingen (DE)
(72) Erfinder: PETRAK, Leo, 76359 Marxzell (DE)
(74) Vertreter: Greif, Thomas
(86) Internationale Anmeldenummer: PCT/EP2014/067442
(87) Internationale Veröffentlichungsnummer: WO 2015/022405

(56) Entgegenhaltungen:
- GB-A- 1 176 943
- JP-A- S51 126 164
- US-A- 3 812 589
- US-A- 3 833 130
- US-A- 4 003 482

## Beschreibung

Die Erfindung betrifft einen Längengeber, ein Verfahren zum Betreiben eines Längengebers sowie einen Kran, bei dem solcher Längengeber angewandt wird, gemäß den Merkmalen der jeweiligen Oberbegriffe der unabhängigen Patentansprüche.

Entwicklung von Sensorkomponenten mit integrierter Sicherheitselektronik für moderne mobile Maschinen wie Krane oder Bagger nach industriellen Sicherheitsstandards EN 61326 und IEC 61508.

Zum stabilen Betrieb eines Kranes sind u.a. Informationen von zahlreichen Sensoren notwendig. Mehrere Längen, unterschiedliche Winkel, Drücke und Kräfte werden gemessen und in einem übergreifenden mathematischen Modell verrechnet. Anschließend wird dieses Modell auf Instabilitäten und Sicherheitsabstände untersucht und entsprechende Empfehlungen, Vorschläge oder unmittelbare Reaktionen werden veranlasst und überwacht.

Aus der DE 10 2012 221 909 A1 ist ein Kran, aufweisend ein Basisteil mit einem verschwenkbaren und teleskopierbaren Ausleger mit zumindest einem weiteren Auslegerelement bekannt, wobei ein Längenwinkelgeber vorgesehen ist, der zumindest ein Kabel aufweist, mit dem die jeweilige Länge des teleskopierbaren Auslegers erfasst wird, wobei ein dem Kabel zugeordneter Kraftsensor vorgesehen ist, mit dem die auf das Kabel in seine axiale Ausrichtung wirkende Kraft erfasst wird. Dokumente GB 1176943 A und US 3833130 A offenbaren den Oberbegriff des Anspruchs 1.

Der Erfindung liegt die Aufgabe zugrunde, ein Verfahren zum Betreiben eines Längengebers sowie seine Anwendung bei einem Kran bereitzustellen, welche gegenüber rein mechanischen Federsystemen zur Erzeugung einer Rückstellkraft des Rückstellsystemes verbessert sind.

Diese Aufgabe ist durch die Merkmale der unabhängigen Patentansprüche gelöst.

Hinsichtlich des Längengebers, der nicht Teil der Erfindung ist, insbesondere des Längenwinkelgebers, ist vorgesehen, dass das Rückstellsystem einen steuerbaren elektrischen Motor aufweist. Während bei einem rein mechanisch wirkenden Rückstellsystem mit einer Feder zur Erzeugung der Rückstellungskraft vorgesehen ist, wird gemäß der Erfindung diese Kraft durch einen steuerbaren elektrischen Motor aufgebracht. Dadurch lässt sich in gezielter Weise die Rückstellkraft durch entsprechende Ansteuerung mittels einer Steuereinheit gezielt beeinflussen. So ist es aufgrund der Ansteuerung des elektrischen Motors möglich, dass zum Beispiel das Kabel immer mit einer konstanten, vorzugsweise mit einer nahezu konstanten Kraft auf die Trommel aufgewickelt bzw. von dieser abgewickelt wird, wenn bei einem Kran der Teleskopausleger ausgefahren bzw. eingefahren wird. Aufgrund dieser nahezu konstanten Kraft, die auf das Kabel wirkt, egal wie weit dieses auf die Trommel aufgewickelt oder von der Trommel abgewickelt ist, lässt sich der Verschleiß über die Betriebsdauer deutlich verringern. Der elektrische Motor wird dabei so angesteuert, dass er zum Beispiel beim Aufwickeln auf die Trommel als Antriebsmotor wirkt, wohingegen er beim Abwickeln des Kabels von der Trommel als Generator wirkt. Selbstverständlich kann er auch beim Abwickeln des Kabels von der Trommel als Generator wirken.

Üblicherweise sind solche Längengeber kompakte Baueinheiten, deren Bauelemente innerhalb eines Gehäuses untergebracht sind. Daher ist bei dem erfindungsgemäßen Längengeber entweder der Motor mit seiner Antriebsachse direkt auf der gleichen Achse wie die Trommel angeordnet oder der Motor ist indirekt über ein Getriebe mit der Trommel verbunden. Je nach Bauweise, Leistung und dergleichen des Motors bietet es sich an, diesen direkt oder indirekt über ein Getriebe mit der Trommel zu verbinden. Die direkte Verbindung des Motors mit der Trommel hat den Vorteil einer besonders kompakten Bauweise, sodass dadurch auch das gesamte Gehäuse des Längengebers kompakt bauend aufgebaut werden kann. Die indirekte Verbindung des Motors über ein Getriebe mit der Trommel hat den Vorteil, dass dadurch eine wesentlich feinfühligere Steuerung des Motors und damit der Einstellung der Kraft, die auf das Kabel wirkt, vorgenommen werden kann. Außerdem kann in beiden Fällen (direkte Anordnung der Achse des Motors auf der Achse der Trommel oder indirekte Verbindung) der Motor sicherstellen, dass beim Aufwickeln des Kabels auf der Trommel die notwendige Kraft zur Verfügung steht, um das Kabel auf die Trommel aufzuwickeln.

Der Längengeber weist eine eigene Stromversorgung auf. Üblicherweise wird der Motor, genauso wie die Steuereinheit zu seiner Ansteuerung, über eine externe Stromversorgung, zum Beispiel eines Kranes oder dergleichen, versorgt. Fällt jedoch diese Stromversorgung aus, kann die eigene Stromversorgung des Längengebers eingesetzt werden um zumindest den Motor, gegebenenfalls aber auch die Steuereinheit zu betreiben. Dies ist unter Sicherheitsaspekten, gerade bei Kranen, besonders wichtig.
Weiterhin ist zur Lösung der Aufgabe ein Verfahren zum Betreiben eines Längengebers vorgesehen, wobei das Rückstellsystem den schon beschriebenen steuerbaren elektrischen Motor aufweist und der Motor derart angesteuert wird, dass sich ein vorgebbarer Kraftverlauf des Kabels ergibt, wenn dieses von der Trommel abgewickelt und/oder auf die Trommel aufgewickelt wird. Durch entsprechende Ansteuerung des Motors wird damit sichergestellt, dass das Kabel, mit dem zum Beispiel die Länge eines Teleskopauslegers eines Kranes bestimmt wird, wenn dieser ein- bzw. ausgefahren wird, immer die gleiche mechanische Spannung aufweist, um damit möglichst genau die Länge des Teleskopauslegers zu detektieren.

In Weiterbildung der Erfindung ist hierzu vorgesehen, dass der Motor derart angesteuert wird, dass sich ein nahezu konstanter Kraftverlauf des Kabels ergibt, wenn dieses von der Trommel abgewickelt und/oder auf die Trommel aufgewickelt wird. Durch diesen konstanten, insbesondere nahezu konstanten Kraftverlauf des Kabels wird sichergestellt, dass dieses immer zwischen den beiden Endpunkten, zwischen denen sich der Teleskopausleger bewegen kann, die gleiche mechanische Spannung innerhalb des Kabels eingestellt wird. Dies führt insbesondere in vorteilhafter Weise dazu, dass das Kabel, welches üblicherweise in etwa parallel zu dem Teleskopausleger angeordnet ist, nicht oder nicht nennenswert durchhängt. Um bei größeren Längen des Teleskopauslegers eine Längenungenauigkeit durch das Durchhängen des Kabels zu kompensieren, kann daran gedacht werden, dass der Motor derart angesteuert wird, dass mit zunehmender Länge, das heißt weiter ausgefahrenem Teleskopausleger, die Kraft auf das Kabel durch entsprechende Ansteuerung des Motors erhöht wird. Dadurch spannt sich das Kabel in seinem Verlauf und ein Durchhängen wird vermieden. Die entsprechende Ansteuerung des Motors kann von einer Steuereinheit vorgenommen und auch berücksichtigt werden, wenn die Länge des abgewickelten Kabels und damit die Länge des ausgefahrenen Teleskopauslegers bestimmt wird.

Gemäß der Erfindung wird mit einem Kraftsensor die auf das Kabel wirkende Kraft gemessen. Dies hat zum einen den Vorteil, dass aufgrund der Kraftmessung nicht nur der Motor entsprechend angesteuert werden kann, sondern auch bestimmt werden kann, ob das Kabel in seinem axialen Verlauf durchhängt oder nicht. Denn mit zunehmender Abwicklung des Kabels von der Trommel stellt sich ein Durchhängen des Kabels (welches wie schon erläutert nahezu parallel zum Teleskopausleger des Kranes angeordnet ist) ein, sodass mit zunehmen Ausfahren des Teleskopauslegers eine höhere Kraft eingestellt werden muss, um dieses Durchhängen zu vermeiden. Durch die Korrelation der gemessenen Kraft und der Ansteuerung des Motors kann somit sichergestellt werden, dass das Kabel in seinem axialen Verlauf nicht oder nicht nennenswert durchhängt. Zum anderen ist mit der Kraftmessung gewährleistet, dass Probleme beim Abwickeln und/oder Aufwickeln des Kabels auf die Trommel erkannt werden. Insbesondere können ein Kabelbruch oder ein Kabelstau dadurch sehr genau erfasst werden. Denn verringert sich die gemessene Kraft abrupt, kann damit detektiert werden, dass ein Kabelbruch vorliegt. Steigt jedoch die auf das Kabel wirkende Kraft über einen vorgebbaren Schwellwert an, ist davon auszugehen, dass es sich um einen Kabelstau handelt. Dies kann durch die Kraftmessung entsprechend detektiert und darauf reagiert werden, was wiederum unter Sicherheitsaspekten bei Betrieb von Kränen besonders wichtig ist.

In Weiterbildung der Erfindung werden weitere Betriebsparameter zur Ansteuerung des Motors berücksichtigt. Bei diesen Betriebsparametern handelt es sich um solche Betriebsparameter der Einrichtung, mit der die Länge durch den Längengeber erfasst wird. Ein typisches Beispiel ist hierfür ein Kran mit einem teleskopierbaren Ausleger, wobei sich die Länge des Teleskopauslegers dadurch ändert, dass ein feststehendes Auslegerelement vorgesehen ist und hiervon ausgehend zumindest ein weiteres Teleskopelement ausgefahren bzw. eingefahren werden kann. Je nach Betriebsart des Kranes kann der Motor entsprechend angesteuert werden.

Wie vorstehend beschrieben, geht die Erfindung von einem Längengeber aus, der die Trommel aufweist, von der das Kabel aufgewickelt bzw. auf die das Kabel aufgewickelt werden kann, um daraus direkt die aufgewickelte bzw. abgewickelte Länge des Kabels zu bestimmen, wobei diese Länge ein Maß für ein weiteres Element, insbesondere den Teleskopausleger, ist. In der Praxis hat es sich jedoch bewährt, nicht nur die bisher rein mechanisch wirkenden Längengeber mit mechanisch wirkenden Rückstellsystemen alleine einzusetzen, sondern auch in diese einen Winkelgeber zu integrieren. Mit dem Winkelgeber wird der Winkel des Teleskopauslegers, über den er ausgehend von einem Basisteil ausgestellt ist, gemessen. Besonders vorteilhaft ist jedoch die Integration sowohl der Winkelmessung als auch des erfindungsgemäßen elektrisch wirkenden Rückstellsystemes in einem Längenwinkelgeber. Alle hierfür notwendigen Elemente, insbesondere der Winkelgeber selber, die Trommel, der Motor und weitere notwendige Elemente, sind in einem Gehäuse untergebracht, welches an geeigneter Stelle an dem Kran, insbesondere dessen Teleskopausleger, angeordnet werden kann.

Die Erfindung realisiert also eine intelligente Motorbremse für einen Längenwinkelgeber (LWG) als Ersatzlösung für ein mechanisches Federsystem. Denn wie schon vorstehend erwähnt wurden in den bisherigen LWG Sensoren rein mechanische Federsysteme zur Erzeugung einer Rückstellkraft eingesetzt. Solch ein typisches Rückstellsystem soll einen annährend konstanten Kraftverlauf garantieren und sich stabil sowohl bezüglich Umwelteinflüsse als auch gegenüber Sicherheitsanforderungen verhalten.

Gesucht wird eine elektrische, parametrierbare Lösung, die flexibel auf sich verändernde Anforderungen seitens der Applikation reagiert und sowohl zu Kosten als auch zu Gewichtsreduzierung beiträgt. In diesem Bereich kann es auch mehrere Arbeiten geben, u.a. in Richtung Konzepterstellung (Stichwort Simulationsmodelle), Lösungsentwurf sowie Realisierung mit anschließender Evaluierung.

Beschreibung der Idee:
- Nachbildung der Kennlinie "Kraftverlauf-Federsystem" mit Hilfe eines "intelligenten" elektrischen Motors
- "Erkennung" der Kranzustände (vorwärts, rückwärts, Halt, Aus, etc.) und Definition entsprechender Profile für die Bremse (langsam, schnell, testend, haltend, etc.)
- Erkennung von Kabellängung durch Einfahren in einen definierten Punkt und gleichzeitiger Längenmessung (evtl. als separate Idee)
- Sicherheitsaspekte wie Erkennung und Gegenwirkung beim Kabelbruch oder Kabelstau ("Impuls-Test")
- Integration eines Akku für den Fall "Spannung weg" (Überbrückung von ca. 3 bis 5 Minuten)

Intelligente Motorbremse für einen Längenwinkelgeber (LWG) eines Arbeitsfahrzeuges, insbesondere eines Kranes, als Ersatzlösung für ein mechanisches Federsystem, wobei eine elektrische, parametrierbare Lösung flexibel auf sich verändernde Anforderungen seitens der Applikation reagiert und sowohl zu einer Kosten- als auch zu einer Gewichtsreduzierung beiträgt.

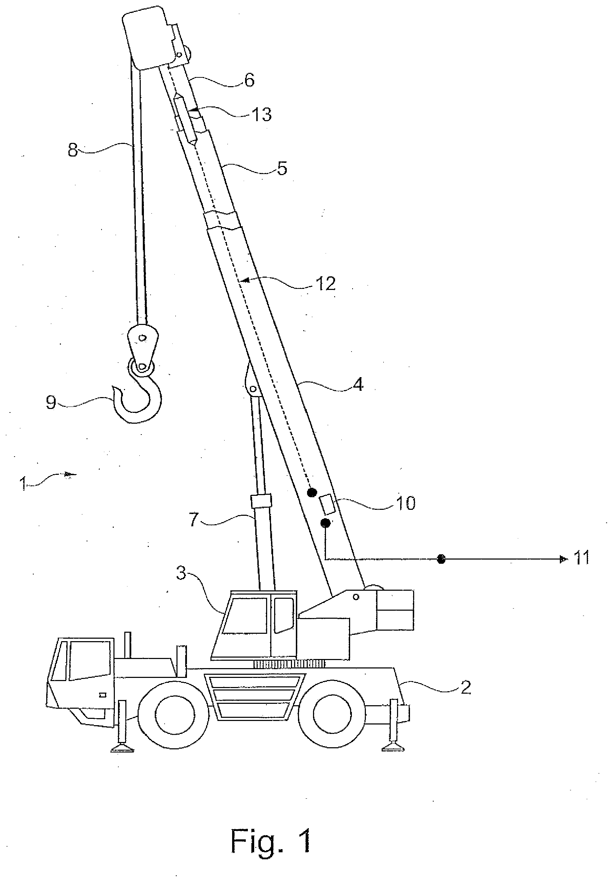

Ein Ausführungsbeispiel der Erfindung ist im Folgenden beschrieben und anhand der Figuren 1 bis 3 erläutert.

In Figur 1 ist, soweit im Einzelnen dargestellt, mit 1 ein Kran bezeichnet, der zum Beispiel ein Basisteil 2 (mit Antrieb für einen Fahrbetrieb) aufweist, auf welchem ein Drehteil 3 angeordnet ist. An dem Drehteil 3 ist ein verschwenkbarer Ausleger 4 (Basisausleger) angeordnet, der seinerseits weitere Auslegerelemente 5, 6 (auch nur ein zusätzliches Auslegerelement oder mehr als zwei Auslegerelemente) aufweist, sodass der Ausleger 4 mit seinen Auslegerelementen 5, 6 in an sich bekannter Weise teleskopierbar ist. Das bedeutet, dass sich die Länge des Auslegers 4 bis 6 verändern kann, wobei diese veränderte Länge für den sicheren Betrieb des Kranes 1 erfasst werden muss. Um den Ausleger 4 in Bezug auf das Basisteil 2 bzw. das Drehteil 3 anstellen bzw. verschwenken zu können, ist beispielhaft ein Hydraulikzylinder 7 dargestellt. Ausgehend von einer nicht dargestellten Winde auf dem Drehteil 3 läuft ein Seil 8 (Kran-Seil) über die Spitze des Auslegerelementes 6 zu einem endseitig angeordneten Haken 9. Zur Erfassung der Länge des Auslegers 4 bis 6 und seiner Verschwenkung relativ zu dem Drehteil 3 bzw. dem Basisteil 2 ist im Prinzip dargestellt ein Längenwinkelgeber 10, dessen Aufbau an sich auch bekannt ist. Dieser Längenwinkelgeber 10 ist einerseits dazu geeignet und ausgebildet, den Winkel des Auslegers 4 in Bezug auf das Drehteil 3 bzw. das Basisteil 2 zu erfassen (hier nicht dargestellt). Mit 11 ist ein Ausgangssignal des Längenwinkelgebers 10 bezeichnet, das einer hier nicht dargestellten Steuervorrichtung übermittelt wird. Zur Erfassung der jeweiligen eingestellten Länge des Auslegers 4 bis 6 ist zwischen dem Längenwinkelgeber 10 und hier der Spitze des Auslegerelementes 6 ein Kabel 12 vorhanden. Dieses Kabel 12 wird bei vollständig eingefahrenen Auslegerelementen 5, 6 in dem Längenwinkelgeber 10 aufgerollt und kann beim Ausfahren der Auslegerelemente 5, 6 von einer Kabeltrommel in den Längenwinkelgeber 10 ausgerollt werden. Dieser Vorgang wird in an sich bekannter Weise von dem Längenwinkelgeber 10 erfasst, sodass das Ausgangssignal 11 nicht nur den Anstellwinkel des Auslegers 4 an die Steuervorrichtung übermittelt, sondern auch die jeweils eingestellte Länge des Auslegers 4 mit seinen Auslegerelementen 5, 6.

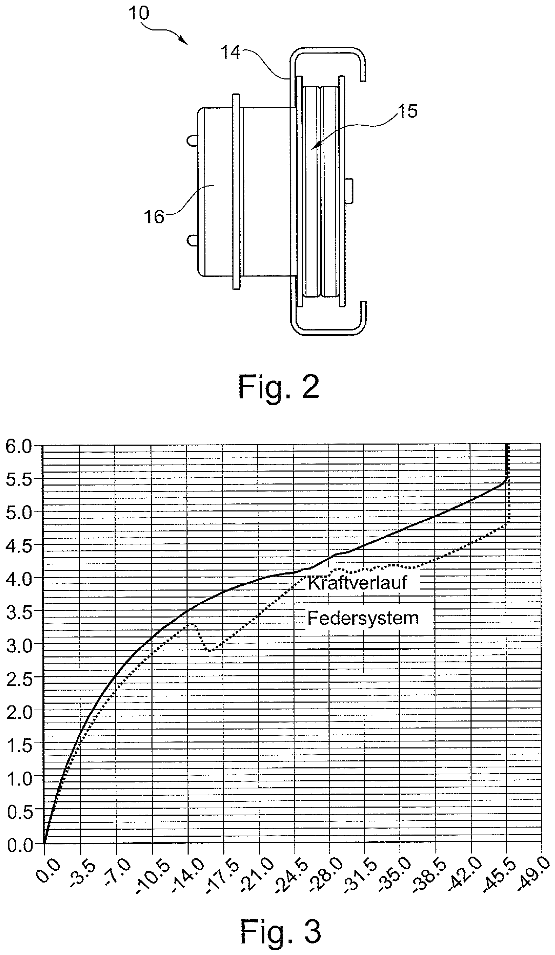

Dem Kabel 12 ist ein Kraftsensor 13 zugeordnet, wobei sich dieser Kraftsensor 13 in dem Ausführungsbeispiel gemäß Figur 1 in dem Verlauf des Kabels 12 befindet und im Endbereich des Auslegerelementes 6 (d. h. in Richtung der Auslegerspitze) angeordnet ist. Dies ist jedoch nur ein Ausführungsbeispiel eines Kraftsensors 13 und seiner Anordnung, wobei auch andere Stellen im Verlauf des Kabels 12 denkbar sind. Während der Kraftsensor 13 gemäß Figur 1 die auf das Kabel 12 in seiner axialen Richtung wirkende Kraft direkt erfasst, kommen auch solche Kraftsensoren in Betracht, die die auf das Kabel 12 wirkende Kraft indirekt (zum Beispiel induktiv) erfassen. Außerdem können unter sicherheitsrelevanten Aspekten auch zwei gleiche oder voneinander unterschiedliche Kraftsensoren vorhanden sein. Das Kabel 12 ist entweder in sich bekannter Weise als Stahlseil ausgebildet, sodass es in diesem Fall erforderlich ist, die an der Auslegerspitze erfasste auf das Kabel 12 wirkende Kraft über geeignete Mittel (siehe hierzu Figur 2) zu übertragen. Wenn das Kabel 12 als Datenkabel ausgebildet ist, können auf einfache Art und Weise der Kraftsensor 13 an das Datenkabel angeschlossen und seine Signale in Richtung des Drehteiles 3 übermittelt werden, sodass in diesem Fall das Ausgangssignal 11 auch die auf das Kabel 12 wirkende Kraft enthält.
Figur 2 zeigt einen prinzipiellen Aufbau eines Längengebers, insbesondere des Längenwinkelgebers 10. Es ist ein Gehäuse 14 vorgesehen, in dem alle erforderlichen Komponenten des Längengebers angeordnet sind. Hierbei handelt es sich zumindest um eine Trommel 15, auf der bzw. von der das Kabel 12 zur Längenbestimmung auf- bzw.- abgewickelt wird. Außerdem ist in dem Gehäuse 14 ein elektrisch ansteuerbarer Motor 16 untergebracht, der das bisher bekannte mechanische Rückstellsystem auf Federkraftbasis ersetzt. Das Gehäuse 14 wird auf geeignete Art und Weise an dem Ausleger 4 angeordnet und befestigt. Außerdem wird der Längengeber an eine nicht dargestellte Steuervorrichtung angeschlossen, an die die Ausgangssignal 11 übertragen werden. Ebenso kann der Längengeber von außen, insbesondere von der Steuervorrichtung, mit Energie für den Betrieb des Motors 16 versorgt werden und/oder eine eigene Energieversorgung aufweisen.

Figur 3 zeigt zwei prinzipielle Kraftverläufe in dem Kabel 12, die sich durch die entsprechende Einstellung bzw. die Ansteuerung des Motors 16 über den Verlauf der minimalen (eingefahren) und maximalen (komplett ausgefahren) Länge des teleskopierbaren Auslegers 4 bis 6 einstellen lassen. Auch lineare oder nahezu lineare Kraftverläufe können eingestellt werden.

### Bezugszeichenliste:

1. Kran
2. Basisteil
3. Drehteil
4. Ausleger
5. Auslegerelemente
6. Auslegerelemente
7. Hydraulikzylinder
8. Seil
9. Haken
10. Längenwinkelgeber
11. Ausgangssignal
12. Kabel
13. Kraftsensor
14. Gehäuse
15. Trommel
16. Elektrisch ansteuerbarer Motor

## Patentansprüche

1. Verfahren zum Betreiben eines Längengebers, insbesondere eines Längenwinkelgebers (10) eines Kranes (1), mit einem Rückstellsystem, aufweisend eine Trommel und ein Kabel, das auf diese Trommel aufgewickelt und von dieser Trommel abwickelbar ist, um eine Länge zu detektieren, wobei das Rückstellsystem einen steuerbaren elektrischen Motor aufweist und der Motor derart angesteuert wird, dass sich ein vorgebbarer Kraftverlauf des Kabels ergibt, wenn dieses von der Trommel abgewickelt und/oder auf die Trommel aufgewickelt wird, **dadurch gekennzeichnet, dass** mit einem Kraftsensor die auf das Kabel wirkende Kraft gemessen wird.

2. Verfahren zum Betreiben eines Längengebers nach Anspruch 1, **dadurch gekennzeichnet, dass** der Motor derart angesteuert wird, dass sich ein nahezu konstanter Kraftverlauf des Kabels ergibt, wenn dieses von der Trommel abgewickelt und/oder auf die Trommel aufgewickelt wird.

3. Verfahren zum Betreiben eines Längengebers nach Anspruch 1 oder 2 **dadurch gekennzeichnet, dass** mit einem Drehzahlsensor die Umdrehungen der Trommel gemessen werden, wobei daraus die auf- bzw. abgewickelte Länge des Kabels bestimmt wird.

4. Verfahren zum Betreiben eines Längengebers nach Anspruch 1, 2 oder 3 **dadurch gekennzeichnet, dass** weitere Betriebsparameter zur Ansteuerung des Motors berücksichtigt werden.

## Claims

1. Method for operating a length sensor, in particular a length/angle sensor (10) of a crane (1), with a resetting system, having a drum and a cable which is wound onto this drum and can be unwound from this drum in order to detect a length, wherein the resetting system has a controllable electric motor, and the motor is actuated in such a way that a predefinable force profile of the cable is obtained when the latter is unwound from the drum and/or wound onto the drum, **characterized in that** the force acting on the cable is measured with a force sensor.

2. Method for operating a length sensor according to Claim 1, **characterized in that** the motor is actuated in such a way that a virtually constant force profile of the cable is obtained when the latter is unwound from the drum and/or wound onto the drum.

3. Method for operating a length sensor according to Claim 1 or 2, **characterized in that** the revolutions of the drum are measured with a rotational speed sensor, wherein the wound-on and/or unwound length of the cable is determined therefrom.

4. Method for operating a length sensor according to Claim 1, 2 or 3, **characterized in that** further operating parameters relating to the actuation of the motor are taken into account.

## Revendications

1. Procédé pour faire fonctionner un capteur de longueur, en particulier un capteur d'angle et de longueur (10) d'une grue (1), doté d'un système de rappel, qui comporte un tambour et un câble, lequel est enroulé sur ledit tambour et peut être déroulé dudit tambour afin de détecter une longueur, dans lequel le système de rappel comporte un moteur électrique pouvant être commandé et le moteur est commandé de manière à obtenir un profil de force prédéterminé du câble lorsque celui-ci est déroulé du tambour et/ou enroulé sur le tambour, **caractérisé en ce que** la force agissant sur le câble est mesurée au moyen d'un capteur de force.

2. Procédé pour faire fonctionner un capteur de longueur selon la revendication 1, **caractérisé en ce que** le moteur est commandé de manière à obtenir une courbe de force pratiquement constante du câble lorsque celui-ci est déroulé du tambour et/ou enroulé sur le tambour.

3. Procédé pour faire fonctionner un capteur de longueur selon la revendication 1 ou 2, **caractérisé en ce que** les rotations du tambour sont mesurées par un capteur de vitesse de rotation, dans lequel la longueur déroulée ou enroulée du câble est déterminée à partir de celles-ci.

4. Procédé pour faire fonctionner un capteur de longueur selon la revendication 1, 2 ou 3, **caractérisé en ce que** d'autres paramètres de fonctionnement sont pris en compte pour la commande du moteur.
